Europäisches Patentamt

European Patent Office

Office européen des brevets

(19)

(11) Veröffentlichungsnummer: **0 344 351**
**A1**

(12) **EUROPÄISCHE PATENTANMELDUNG**

(21) Anmeldenummer: 88108898.3

(22) Anmeldetag: 03.06.88

(51) Int. Cl.⁴: **B01D 53/26** , **F28D 7/02** , **F28F 23/00**

(43) Veröffentlichungstag der Anmeldung:
06.12.89 Patentblatt 89/49

(84) Benannte Vertragsstaaten:
AT BE CH DE ES FR GB GR IT LI LU NL SE

(71) Anmelder: VIA Gesellschaft für
Verfahrenstechnik mbH
Heerdter Lohweg 63-71
D-4000 Düsseldorf 11(DE)

(72) Erfinder: Frischmann, Werner
Wilhelmshöhe 37a,
D-5810 Witten-Stockum(DE)

(74) Vertreter: Stratmann, Ernst, Dr.-Ing.
Schadowplatz 9
D-4000 Düsseldorf 1(DE)

(54) Gas-Kältemittel-Wärmetauscher, insbesondere für Drucklufttrockner.

(57) Es wird ein Gas-Kältemittel-Wärmetauscher beschrieben, der insbesondere für Drucklufttrockner
geeignet ist und aus einer ersten Rohrschlange (12)
zum Hindurchführen von zu kühlendem Gas (14),
und einer zweiten Rohrschlange (16) zum Hindurchführen von Kältemittel (18) besteht, wobei die zweite
Rohrschlange (16) zumindest über eine Teilerstrek-
kung der ersten Rohrschlange (12) mit dieser in
direktem Wärmeübergangskontakt (20) steht. Die erste (12) und die zweite (16) Rohrschlange sind dabei
jeweils in Form einer kegelförmigen Wendel (27, 29)
vorgesehen, die jeweils gleiche Wendelsteigung (S)
besitzen und so ineinander angeordnet sind, daß im
wesentlichen jede Wendelwindung (31, 37; 35, 33)
der einen Rohrschlange (27 bzw. 29) von jeweils
zwei benachbarten Wendelwindungen (35, 33 bezüglich 31; 31, 37 bezüglich 33) der anderen Rohrschlange entlang einer zur Rohrachse parallelen Linie berührt wird.

Fig. 1.

## Gas-Kältemittel-Wärmetauscher, insbesondere für Drucklufttrockner

Die Erfindung betrifft einen Gas-Kältemittel-Wärmetauscher, insbesondere für Drucklufttrockner, bestehend aus einer ersten Rohrschlange zum Hindurchführen von zu kühlendem Gas und einer zweiten Rohrschlange zum Hindurchführen von Kältemittel, wobei die zweite Rohrschlange zumindest über eine Teilerstreckung der ersten Rohrschlange mit dieser in direktem Wärmeübergangskontakt steht.

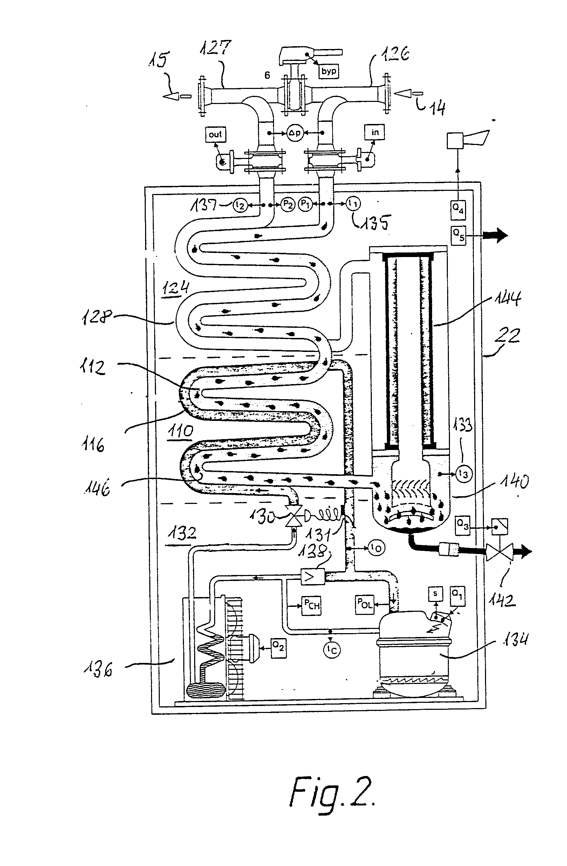

Ein Drucklufttrockner, der einen Gas-Kältemittel-Wärmetauscher der oben genannten Art benutzt, ist in Fig. 2 dargestellt.

Der direkte Wärmekontakt zur Wärmeübertragung von der Oberfläche der das Gas führenden Rohrschlange zur Oberfläche der das Kältemittel führenden Rohrschlange stellt einen sehr einfachen Weg der Wärmeübertragung dar, ist aber für manche Anwendungszwecke nicht ausreichend effektiv. Infolge des gemäß dieser Figur benutzten Linienkontaktes zwischen den beiden Rohrschlangen ist der Wärmeübergangswiderstand auch bei Verwendung von Materialien hoher Wärmeleitfähigkeit, wie Kupfer, recht hoch. Dies verschlechtert nicht nur den Wirkungsgrad der Anordnung, sondern führt auch dazu, daß bestimmte, von der zu trocknenden Druckluft berührte Wärmetauscherflächen, die von dem Linienkontakt relativ weit entfernt sind, nicht kalt genug werden, um die gewünschte Taupunkterniedrigung zu erreichen. Senkt man die Kältemitteltemperatur so weit ab, daß diese Bereiche eine ausreichend tiefe Temperatur erreichen, gibt es wiederum andere Bereiche, die nahe dem Linienkontakt liegen, die zu kalt werden und zum Ausfrieren von z. B. Wasserdampf führen, was den Durchflußwiderstand für Druckluft nicht nur erhöhen sondern zum völligen Ausfall der Funktion des Drucklufttrockners führen kann.

Um gleichmäßig abgekühlte Wärmetauschflächen zu erhalten, so daß keine Stellen mit zu starker Abkühlung und keine anderen Stellen mit nicht ausreichender Abkühlung entstehen, ist es bereits bekannt, die beiden Rohrschlangen als Rohr-in-Rohr-Konstruktion auszuführen. Zu diesem Zweck wird ein Rohr größeren Durchmessers über ein Rohr (oder mehrere Rohre) kleineren Durchmessers angeordnet und durch das eine Rohr, vorzugsweise das Innenrohr (oder die Innenrohre), Kältemittel geleitet, während das andere Rohr, vorzugsweise das äußere Rohr, mit der zu trocknenden Luft beaufschlagt wird. Um dieses zweite Rohr kann dann u. U. noch ein drittes Rohr angeordnet werden, das wiederum Kältemittel führt, so daß alle von Gas berührten Flächen auf Kältemitteltemperatur gehalten sind. Diese Rohr-in-Rohr-in-Rohr-Konstruktion, siehe beispielsweise die DE 2709961 C2 der Anmelderin, wie auch die weiter oben genannte Rohr-in-Rohr-Konstruktionen arbeiten an sich recht zufriedenstellend, sind aber sehr aufwendig in der Herstellung.

Eine noch andere Möglichkeit zeigt die europäische Patentveröffentlichung 0179987 der Anmelderin, in der ein Gas-Kältemittel-Wärmetauscher zur Anwendung gelangt, bei dem die beiden Rohrschlangen nicht in direktem Wärmekontakt stehen, sondern in einer gemeinsamen, Wärme gut speichernden und leitenden Flüssigkeit angeordnet sind, die durch ihre Wärmespeichereigenschaften sicherstellt, daß eine möglichst gleichmäßige Temperatur bei den von der Druckluft durchströmten Rohrwandungen erreicht wird. Auch diese Anordnung hat jedoch Nachteile: Wird Wasser oder eine Wasser-Salz-Lösung (Sole) benutzt, macht sich die besondere Eigenschaft von Wasser nachteilig bemerkbar, bei 4° C seine größte Dichte zu erlangen. Das bedeutet, daß gerade im Arbeitsbereich eines derartigen Trockners die Abhängigkeit der Mediumdichte von der Temperatur gegen Null geht. Unterschiedliche Temperaturen führen daher zu keiner oder nur noch geringen Konvektion, so daß hier die als "Thermalmasse" wirkende Sole ein schlechter Wärmeleiter ist. Das hat verschiedene Nachteile: Zwar kann, wenn beispielsweise weniger als 20% der Nennleistung vom Drucklufttrockner angefordert wird, die Gesamtanlage, wie sie beispielsweise in Fig. 2 dargestellt ist, in einen sogenannten intermittierenden Betrieb gehen, weil die Wärmeträgheit der Thermalmasse die Zeiten zwischen den Abschaltungen überbrücken kann. Wenn jedoch kurz nach dem Wiedereinschalten beim intermittierenden Betrieb plötzlich viel Leistung, beispielsweise nahezu Nennleistung gefordert wird, ist der Wärmetauscher dann nicht mehr in der Lage, ausreichende Kälteleistung über die Thermalmasse an die Druckluft zu liefern, so daß dann nicht ausreichend entfeuchtete Druckluft zumindest für eine bestimmte Zeit abgegeben wird.

Will man diesen Nachteil umgehen, muß man auf den intermittierenden Betrieb verzichten und für eine kontinuierliche Kühlung mit 100 %iger Leistung sorgen, wobei dann jedoch die nicht benötigte Kälteenergie zur Vermeidung von Vereisungserscheinungen über eine Nebenschlußleitung (Heißgasbeipassventilanordnung) beseitigt werden muß. Dieses Verfahren ist jedoch wiederum sehr energieaufwendig, weil stets volle Kühlleistung geliefert werden und letztlich als Abfallwärme beseitigt werden muß.

Es ist Ziel der vorliegenden Erfindung, einen Gas-Kältemittel-Wärmetauscher der eingangs genannten Art zu schaffen, mit dem auch Teillastbetrieb (mit Abschaltung der Kältemaschine) möglich ist, ohne daß die Gefahr des Einfrierens besteht, und der trotzdem bei plötzlicher voller Last (nach Teillastbetrieb) in der Lage ist, ohne "Todzeit" die für volle Last notwendige Kühlleistung zu liefern.

Desweiteren soll der Gas-Kältemittel-Wärmetauscher so ausgestaltet sein, daß er einen kompakten, nach Möglichkeit sogar modularen Aufbau ermöglicht und verhältnismäßig geringe Herstellungskosten verursacht.

Gelöst wird die Aufgabe dadurch, daß die erste und die zweite Rohrschlange jeweils die Form einer kegelstumpfartigen Wendel aufweisen, die jeweils gleiche Wendelsteigung besitzen und so ineinander angeordnet sind, daß im wesentlichen jede Wendelwindung der einen Rohrschlange von jeweils zwei benachbarten Wendelwindungen der anderen Rohrschlange entlang einer zur Rohrachse parallelen Linie berührt wird.

Durch diese Maßnahme ergibt sich nicht nur ein gegenüber dem eingangs geschilderten Stand der Technik verdoppelter linienartiger Berührungsbereich, die beiden Berührungslinien sind auch radial um den Rohrschlangenquerschnitt herum auseinandergezogen, so daß unter Mitwirkung der Wärmeleitfähigkeit des Rohrmaterials eine weitgehende Vergleichmäßigung der Wandtemperatur erreicht werden kann, bei gleizeitig verringertem Wärmeübergangswiderstand. Außerdem ist die Anordnung in noch zu beschreibender Weise sehr einfach herstellbar und besitzt teilweise auch selbsttragende Eigenschaften.

Die kegelstumpfartige Wendelform hat aber nicht nur herstellungstechnische Vorteile und die bereits geschilderten verbesserten Wärmeverteilungs- und Wärmeübergangseigenschaften, durch die Kegelform ergeben sich auch ganz besondere, erst durch Versuche festgestellte Verwirbelungsvorgänge, die eine noch weiter erhöhte Vergleichmäßigung des Wärme- bzw. Kälteüberganges vom Kältemittel auf das abzukühlende Gas ergibt.

Bereits durch diese erfindungsgemäße geometrische Anordnung läßt sich die obige Aufgabe prinzipiell lösen, wenn auch durch weitere Maßnahmen diese Aufgabenlösung noch in verschiedener Hinsicht verbessert werden kann. So hat es sich erwiesen, daß dann, wenn die Rohrschlangen räumlich so angeordnet sind, daß die Kegelstumpfachse im wesentlichen senkrecht steht und das Kegelstumpfende mit dem größeren Durchmesser oben liegt, die Verwirbelungseigenschaften und damit die Vergleichmäßigung des Wärmeüberganges und die Verringerung des Wärmeübergangswiderstandes noch größer wird.

Zur Materialersparnis kann es günstig sein, wenn gemäß einer noch anderen Ausführungsform die Rohrschlange für das Kältemittel aus Rohrmaterial mit kleinerem Durchmesser gegenüber dem des Rohrmaterials für das Gas ausgeführt wird.

Der Aufgabenlösung weiterhin dienlich ist es, wenn die Rohrschlange für das Kältemittel zwei Zweige umfaßt, wobei der erste Zweig einen innerhalb des von der Gasrohrschlange gebildeten Kegelstumpfes angeordneten ersten Kegelstumpf und der zweite Zweig einen außerhalb des Kegelstumpfes der Gasrohrschlange angeordneten Kegelstumpf bildet, derart, daß im wesentlichen jede Wendelwindung der Gasrohrschlange von jeweils vier benachbarten Wendelwindungen der Kältemittelrohrschlangenzweige entlang von zur Gasrohrachse parallelen Linien berührt wird. Auf diese Weise läßt sich die Anzahl der linienförmigen Berührungsbereiche für jedes gasführende Rohr von zwei auf vier nochmals verdoppeln, bei nur geringfügig größerem Aufwand an Material- und Arbeitskosten.

Günstig ist es, wenn das obere Ende der Gasrohrschlange mit einem Gaszufuhranschluß und das untere Ende mit dem Gasabfuhranschluß verbunden ist, während das untere Ende des Kältemittelrohres (oder die unteren Enden der Kältemittelrohre) mit dem Kältemittelzufuhranschluß und das obere Ende (bzw. die oberen Enden) mit dem Kältemittelabfuhranschluß verbunden sind. Auf diese Weise ergibt sich eine günstige Gegenstromanordnung mit besonders vorteilhaften Kühleigenschaften. Sind zwei Kältemittelrohre vorhanden, können diese parallel geschaltet werden oder aber, zur Erlangung höherer Verdampfungseffektivität, auch in Serie hintereinander.

Es ist zweckmäßig, die Rohrschlangenanordnung in einem Gehäuse einzuschließen, das mit einer wärmeübertragenden/wärmespeichernden Masse (sogenannter Thermalmasse) gefüllt ist, wobei diese Thermalmasse dann, wenn das Gehäuse flüssigkeitsdicht ausgeführt wird, als Flüssigkeit vorgesehen sein kann, wie Sole, Wasser-Glykolmischung oder dgl.. Durch diese Maßnahme werden zum einen die Wärmeübertragungseigenschaften noch weiter verbessert, ebenso die Wärmespeichereigenschaften, was wiederum in Richtung der Aufgabenlösung zusätzliche Vorteile bringt. Wird Sole oder Wasser-Glykolgemisch oder eine sonstige Flüssigkeit benutzt, muß das Gehäuse auf Dauer flüssigkeitsdicht gemacht und auch dicht gehalten werden. Das kann unter Umständen lästig sein, so daß gemäß einer noch anderen Ausführungsform, bei der das Gehäuse nur im wesentlichen flüssigkeitsdicht ist, die wärmeübertragende/wärmespeichernde Masse eine Flüssigkeit oder Paste ist, deren Viskosität hoch ist oder die nach dem Einfüllen in das Gehäuse hoch wird oder die sich auch ganz verfestigt. Eine solche Thermalmasse kann beispielsweise durch Kohlestaub gebildet sein, der mit einer Flüssigkeit, wie Sole oder dergleichen oder auch durch Antifrogen zu einer Paste geformt ist, so daß selbst dann, wenn das Gehäuse geringfügig undicht ist, die Thermalmasse aus dem Gehäuse nicht oder nur in unwesentlichen Mengen austreten kann. Dadurch ergeben sich wesentliche Handhabungsvorteile bei der Fertigung, zumal Kohlestaub in Verbindung mit dem flüssigen Kältemittel sich bei Versuchen als ein besonders guter Wärmeleiter wie auch als ein besonders guter Wärmespeicher erwiesen hat.

Gegenüber z. B. der Rohr-in-Rohr-Konstruktion hat die hier in Rede stehende Konstruktion außerordentlich große Durchschnittsquerschnitte, so daß der Strömungswiderstand insbesondere für das zu behandelnde Gas wesentlich kleiner ist als bei einem Rohr-in-Rohr-System vergleichbarer Leistungsfähigkeit. Wegen des verringerten Strömungswiderstandes sind auch die Druckverluste bei der neuartigen Konstruktion viel geringer. Die dadurch sich ergebende niedrigere Strömungsgeschwindigkeit, die normalerweise zu geringerer Wirbelbildung und damit zu schlechteren Wärmeübergangseigenschaften führen würde, wird hier kompensiert, und zwar aufgrund der besonderen Form der kegelstumpfartigen Spirale, die wiederum zusätzliche Verwirbelungseffekte ergibt. Dabei hat sich als vorteilhaft erwiesen, daß offenbar die Verwirbelungseffekte mit kleiner werdendem Radius der kegelförmigen Spirale zunehmen und daß gerade hier der Temperaturunterschied zwischen Kältemittel bzw. Thermalmasse und abzukühlendem Gas sich verkleinert. Der kleiner werdende Temperaturabstand wird somit zumindest teilweise ausgeglichen durch den infolge größer werdender Wirbelbildung sich verbessernden Wärmeübergang.

Versuche haben gezeigt, daß bei gleicher Rohrlänge eine zylindrische Rohrschlange einen um 10 bis 15 % höheren Druckabfall und eine um 2 bis 4°C schlechtere Abkühltemperatur besitzt, als es bei der erfindungsgemäß kegelförmig ausgebildeten Rohrschlange der Fall ist, bei dem ein Optimum zwischen Druckabfall und Wärmeübergang erreicht wird.

Zur Überprüfung der Temperatur des austretenden Gases und auch zur Regelung der Temperatur des Kältemittels ist ein Temperaturfühler vorgesehen. Der erfindungsgemäße Gas-Kältemittel-Wärmetauscher ermöglicht es dabei, hier eine optimale Anordnung zu wählen: So läßt sich gemäß einer Weiterbildung der Erfindung am unteren Ende des Gehäuses ein einerseits mit dem ausströmenden Gas und andererseits mit der Thermalmasse in Wärmekontakt stehender Temperaturfühler vorsehen. Insbesondere könnte dieser Temperaturfühler ein in einem Metallrohr (Tauchhülse) einschiebbarer Fühler sein, wobei die Tauchhülse mit einem Metallzylinder oder -stutzen verschweißt oder verlötet ist, der vom ausströmenden Gas durchströmt ist und der wiederum in der Thermalmasse eingebettet ist. Damit erfaßt der Temperaturfühler nicht nur die Temperatur des aus dem Wärmetauscher austretenden Gases, sondern gleichzeitig auch teilweise die Temperatur der Thermalmasse, wobei durch entsprechende Formgebung die Anteile der beiden Temperatureinflüsse gesteuert werden können, um so optimale Betriebseigenschaften zu erreichen. Besonders problematisch ist nämlich der Betrieb dann, wenn zeitweise keine Druckluft abgenommen wird und damit auch keine Gasströmung in dem Wärmetauscher stattfindet. In diesem Falle ist die Messung der Temperatur besonders schwierig und wird erfindungsgemäß dadurch sichergestellt, daß anstelle der Temperatur des Gases die Temperatur der Thermalmasse wirksam wird. Die Schaltgenauigkeit läßt sich dadurch wesentlich verbessern.

Ein weiterer Vorteil der neuartigen Anordnung ist auch der, daß sie sich so gestalten läßt, daß ein oberer Teil des äußeren Zweiges des Kältemittelrohres ersetzt werden kann durch ein Gasrohr, dessen unteres Ende mit dem unteren Ende der Gasrohrwendel - ggf. unter Zwischenschaltung eines Kondensatabscheiders und/oder anderer Gasbehandlungsanordnungen - verbunden und dessen oberes Ende mit dem Gasabführungsanschluß verbunden ist. Damit wird praktisch in den Gas-Kältemittel-Wärmetauscher ein Gas-Gas-Wärmetauscher integriert, ohne daß die Raumerfordernisse wesentlich steigen. Ein derartiger Gas-Gas-Wärmetauscher zusätzlich zu dem Gas-Kältemittel-Wärmetauscher erhöht den Wirkungsgrad der Anordnung beträchtlich, weil durch abgekühltes und getrocknetes Gas noch zu trocknendes Gas vorgekühlt werden kann und gleichzeitig das getrocknete Gas wieder auf annähernd Raumtemperatur aufgewärmt werden kann, ohne daß dadurch zusätzliche Heizeinrichtungen erforderlich werden. Durch die Integration wird nicht nur die Gesamtanordnung kompakter, die Anzahl der notwendigen Anschlüsse verringert sich auch und macht dadurch die Gesamtanordnung noch preiswerter.

Es sei ergänzt, daß in den Konus auch die bereits erwähnten weiteren Gasbehandlungseinrichtungen ggf. angeordnet werden können, beispielsweise Fangrillen-Abscheideeinrichtungen, wie sie in der EU-Patentanmeldung 88102966.4 der Anmelderin beschrieben sind.

Die Erfingung bezieht sich auch auf die Verwendung eines derartigen, vorstehend beschriebenen Gas-Kältemittel-Wärmetauschers in einem Drucklufttrockner, der eine thermostatgesteuerte Kältemaschine zur Verdichtung des Kältemittels sowie einen Kondensatabscheider aufweist, der vorteilhafterweise ein Fangrillenkondensatabscheider ist. Der Vorteil der neuartigen Konstruktion ist der, daß diese Konstruktion sehr leicht in die Form eines Moduls zum Aufbau von Drucklufttrocknern abgestufter Nennleistung gebracht werden kann. Ein wesentlicher Grund für diese Verwendungsmöglichkeit als Modul ist darin zu sehen, daß konstruktionsbedingt die Strömungswiderstände der Rohrschlangen, sofern sie gleiche Nennleistung besitzen, innerhalb sehr geringer Toleranzen identisch sind. Bei bisher bekannter Konstruktionen, insbesondere bei der Rohr-in-Rohr-Konstruktion, ergaben sich fertigungsbedingt durchaus stärkere Abweichungen hinsichtlich des Strömungswiderstandes, selbst bei identischer Grundkonstruktion. Bei größeren Abweichungen ist aber eine direkte fluidmäßige Parallelschaltung von Rohrschlangen einzelner Komponenten nicht mehr möglich, weil sonst die einzelnen Komponenten ganz unterschiedlich ausgelastet werden. Bei der erfindungsgemäßen Konstruktion sind die Abweichungen dagegen so gering, daß dieses Problem nicht mehr vorhanden ist.

Von Vorteil ist auch, daß durch die Trichterform die einzelnen Rohrschlangen nicht nur nebeneinander angeordnet werden können, sondern ggf. unter Ausnutzung teilweiser Ineinandersteckbarkeit auch übereinander.

Die Modulbauweise hat nicht nur fertigungstechnische Vorteile (Herstellbarkeit größerer Serien nur einer Leistungsklasse und dadurch Preisreduzierungen selbst bei höheren Leistungsklassen, die durch Parallelschaltung von Moduln erreichbar sind), weitere Vorteile lassen sich nämlich noch dadurch erreichen, daß zusätzliche Betriebssicherheit auf einfache Weise gewonnen werden kann: Wenn beispielsweise zwei Moduln gleicher Nennlast mit zugehörigen Kältemittelverdichtern vorgesehen werden, läßt sich eine Ansteuerungsweise ermöglichen, bei der bei Störung oder Ausfall des einen Moduls dieses abgeschaltet und automatisch der andere angeschaltet wird.

Neben unterschiedlichen Leistungswerten können auch Moduln für unterschiedlichen Betriebsdruck und/oder unterschiedlichen Taupunkt vorgesehen sein, was in bestimmten Anwendungsfällen von Vorteil ist. Die Steuereinrichtung können im übrigen so gestaltet sein, daß sie unabhängig von dem eigentlichen Gerät angeordnet werden, beispielsweise fern an einem Überwachungszentrum.

Die Erfingung betrifft auch ein Verfahren zur Herstellung einer Rohrschlange zum Aufbau eines Gas-Kältemittel-Wärmetauschers der vorstehend beschriebenen Bauart, wobei dieses Verfahren gekennzeichnet ist durch die folgenden Verfahrensschritte:

a) Auf einem kegelstumpfförmigen Dorn mit im Abstand entsprechend dem größten Rohrdurchmesser angeordneten, spiralförmigen Halterillen wird ein Rohr spiralförmig aufgewickelt und fixiert;

b) auf die so gebildete kegelförmige Spirale wird in die Spiraleinbuchtungen ein weiteres Rohr von gleichem oder kleinerem Durchmesser aufgewickelt und fixiert,

d) der Dorn wird aus der spiralförmigen Rohrschlange durch Herausdrehen oder Herausziehen entfernt.

Diese Verfahrensweise ermöglicht das Aufwickeln sowohl des Gasrohres wie auch des Kältemittelrohres in sehr einfacher Weise in der gewünschten Kegelspiralform, ohne daß besondere Maßnahmen getroffen werden müssen, die sonst häufig notwendig sind, um zu verhindern, daß die Rohrvolumen sich beim Wickeln in ungünstiger Weise verengen. Das Verfahren kann auch dadurch ausgestaltet werden, daß auf einen Dorn der gleichen Abmessungen wie bei Schritt a) ein Kältemittelrohr aufgewickelt und fixiert wird und anschließend dann eine Rohrschlangenspirale, die gemäß den vorstehend beschriebenen Schritten a), b), c) bereits hergestellt wurde, auf die Spirale gemäß dem vorliegende Schritt b aufgeschraubt (was aufgrund der Spiralform möglich ist) oder aufgewickelt und dann fixiert wird.

Die Fixierung der Spirale nach dem Aufwickeln auf dem Dorn kann durch Verlöten erfolgen, insbesondere durch eine außerhalb der zum "Spiralverschrauben" benötigten Mantelflächen aufgebrachte, axial ausgerichtete Lötnaht. Alternativ sind natürlich auch andere Fixierungsmittel wie Verkleben, Verschweißen und dgl. möglich, jedoch hat sich bei den hier meist verwendeten Kupfermaterialien ein Verlöten als besonders günstig erwiesen.

Zur Erhöhung des Wärmedurchganges ist es vorteilhaft, die Spalte zwischen aneinander liegenden Rohren mit Metall auszufüllen, also Kehlnähte zu bilden, was durch Eintauchen in ein Lötbad geschehen kann, oder durch Einbringen der ganzen Anordnung in ein galvanisches Bad und galvanisches Aufbringen des Metalls, oder auch durch Ausspritzen der Kehlen mit metallischem Pulver, sogenanntes Auftragsspritzen.

Die Erfindung wird anhand von Ausführungsbeispielen näher erläutert, die in den Zeichnungen dargestellt sind.

Es zeigt:

Fig. 1 einen Gas-Kältemittel-Wärmetauscher gemäß einer ersten Ausführungsform der Erfindung;

Fig. 2 eine schematische Darstellung einer Drucklufttrocknereinheit, mit der ein Anwendungsfall für den in Fig. 1 dargestellten Gas-Kältemittel-Wärmetauscher erläutert werden soll;

Fig. 3 in einer ähnlichen, jedoch schematisierten Darstellung wie in Fig. 1 eine weitere Ausführungsform des erfindungsgemäßen Gas-Kältemittel-Wärmetauschers;

Fig. 4 in einer ähnlichen Darstellung wie Fig. 3 eine noch andere Ausführungsform mit integriertem Gas-Gas-Wärmetauscher;

Fig. 5 eine schematische Darstellung von verschiedenen Möglichkeiten bei gleichem Kegelwinkel unterschiedliche Rohrtypen miteinander zu kombinieren;

Fig. 6 eine schematische Darstellung der Anordnung eines erfindungsgemäß ausgestalteten Gas-Kältemittel-Wärmetauschers in einem Isoliergehäuse;

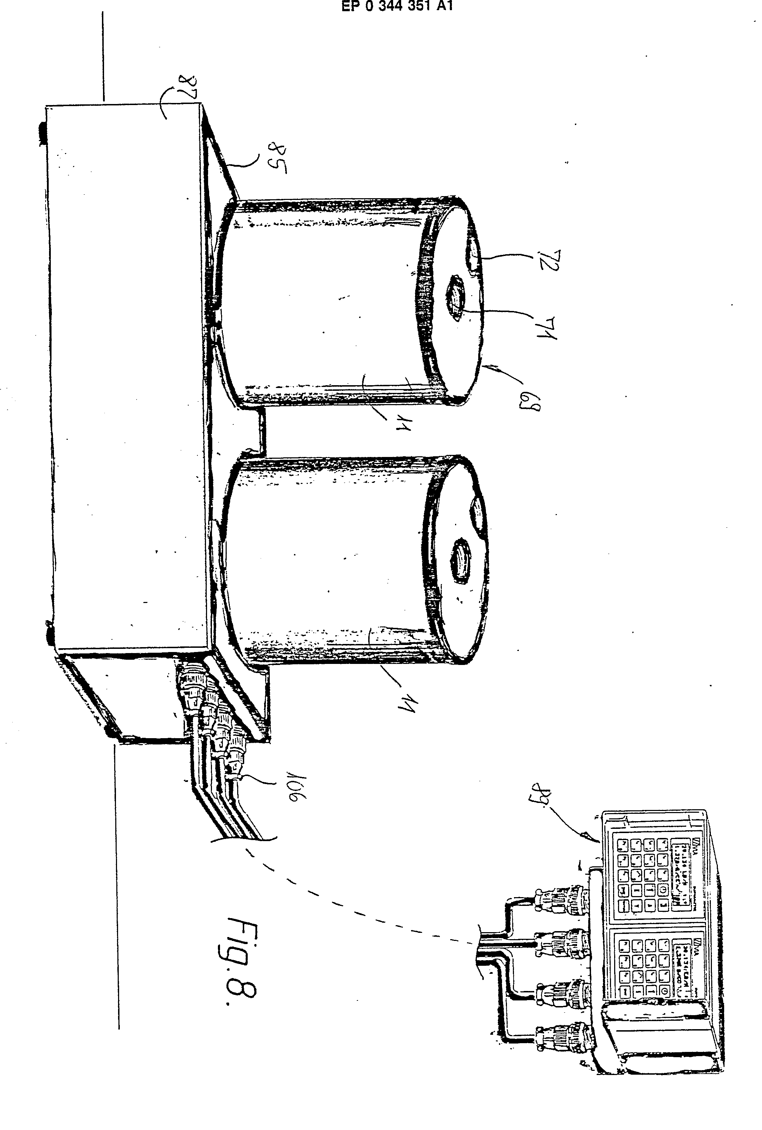

Fig. 7 in einer perspektivischen Darstellung Bestandteile eines unter dem Gehäuse gemäß Fig. 6 anzubringenden Gerätekastens für weitere Bestandteile eines Drucklufttrockners;

Fig. 8 in einer perspektivischen Ansicht zwei Gehäuseeinheiten gemäß Fig. 6, aufgesetzt auf einen gemeinsamen Gerätekasten gemäß Fig. 7 und in Verbindung mit einer fern angeordneten Steuereinrichtung;

Fig. 9 in einer ähnlichen Darstellung wie Fig. 3 eine Möglichkeit, bei einem Gas-Kältemittel-Wärmetauscher gemäß der Erfindung in besonders günstiger Weise einen für die Steuerung geeigneten Temperaturfühler anzuordnen;

Fig. 10 in einer perspektivischen Darstellung ein Isoliergehäuse mit eingebrachtem Gas-Kältemittel-Wärmetauscher gemäß der Erfindung, wobei das Gehäuse jedoch nicht rund, sondern tropfenförmig ist;

Fig. 11 in einer Draufsicht eine ähnlich gestaltete Gehäuseform;

Fig. 12 in einer weiteren Draufsicht die Möglichkeit, zwei (bis vier) derartige Gehäuse gemäß Fig. 11 miteinander zu kombinieren;

Fig. 13 einen tabellarische Darstellung, wie durch Kombination unterschiedlicher Moduln verschiedene Nennwertbereiche erreicht werden können;

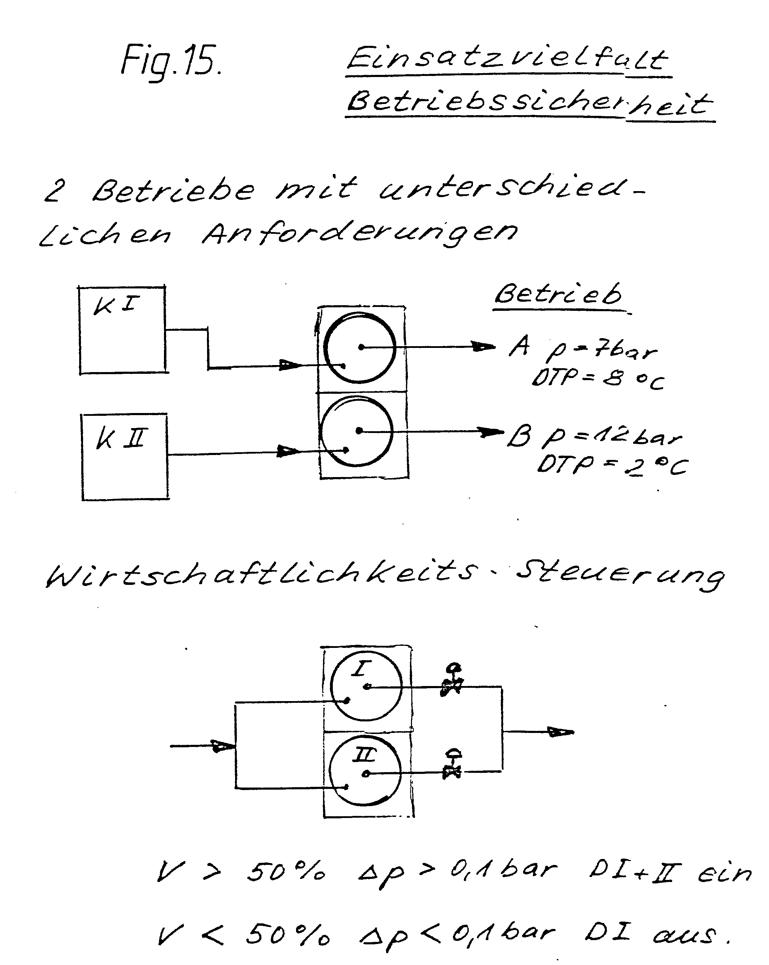

Fig. 14 und 15 ebenfalls in schematischen Darstellungen weitere Möglichkeiten zur Kombination von Moduln unterschiedlicher Ausführung.

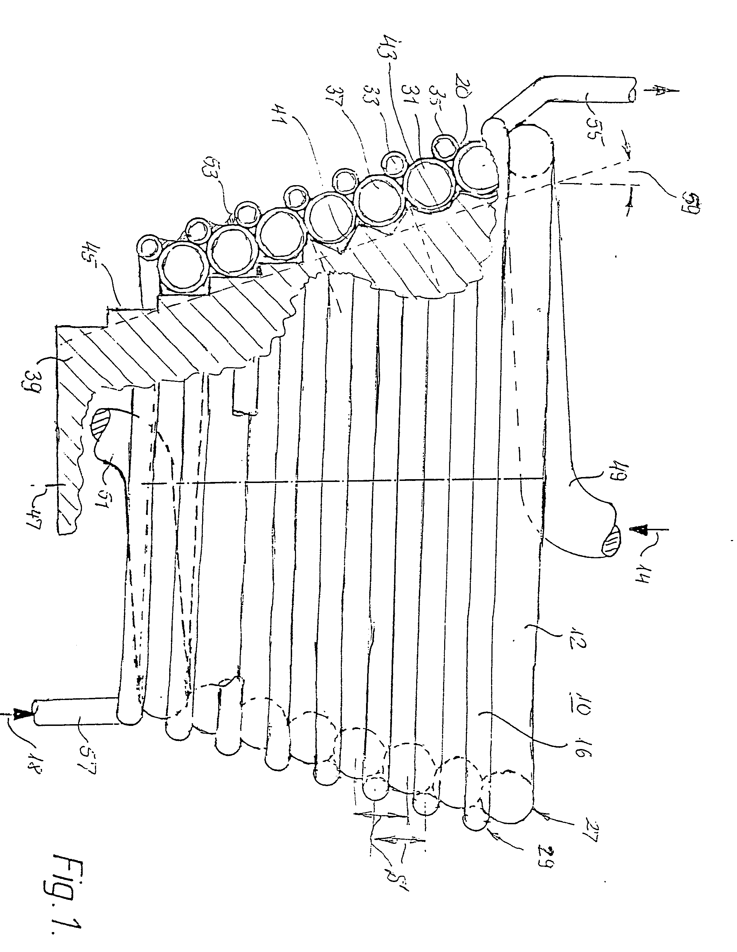

Fig. 1 zeigt in einer Seitenansicht sowie in teilweiser Schnittansicht einen Gas-Kältemittel-Wärmetauscher 10, bestehend aus einer ersten Rohrschlange oder Coil 12 zum Hindurchführen von zu kühlendem Gas 14, beispielsweise zu trocknender Druckluft, und einer zweiten Rohrschlange oder Coil 16 zum Hindurchführen von Kältemittel 18, vorzugsweise, wie auch dargestellt, in Gegenstromrichtung. Wie die Darstellung erkennen läßt, ist die zweite Rohrschlange 16 mit der ersten Rohrschlange oder Gasrohrschlange 12 in direktem Wärmekontakt, siehe beispielsweise den Kontaktpunkt 20. Ein direktes Nebeneinanderherführen von zwei Rohrschlangen, derartig, daß ein Linienkontakt entsteht, ergibt sich auch aus der Darstellung der Fig. 2, in der ein Drucklufttrockner 22 schematisch dargestellt ist, in dem ein Gas-Kältemittel-Wärmetauscher 110 von einer ersten Rohrschlange 112 und einer zweite Rohrschlange 116 gebildet wird, die gemäß dieser schematischen Darstellung, in Linienberührung zueinander schlangenförmig angeordnet sind. Wie bei derartigen Drucklufttrocknern zur Erhöhung der Wirschaftlichkeit üblich, befindet sich oberhalb des Gas-Kältemittel-Wärmetauschers 110 ein Gas-Gas-Wärmetauscher 124, bestehend aus einer Fortsetzung der Gasrohrschlange 112 bis zu einem Anschlußstutzen 126 für zu behandelnde Druckluft 14, und aus einer weiteren, wieder in Linienkontakt dazu stehenden Rohrschlange 128, die an ihrem oberen Ende mit einem weiteren Anschlußstutzen 130 für die Abgabe von behandeltem Gas 15 in Verbindung steht. Die Kältemittelrohrschlange 116 steht an ihrem Zufuhrende (unten) über ein sogenanntes Thermoexpansionsventil 130, das von der Temperatur des Austrittsendes der Rohrschlange gesteuert wird, mit einer Quelle 132 für Kältemittel in Verbindung, bestehend aus einem Kältemittelverdichter 134, einem luftgekühlten Kältemittelkondensator 136 und einem, bei Anlagen des Standes der Technik meist vorhandenen Heißgasbeipassventil 138.

Das untere Ende der das Gas führenden Rohrschlange innerhalb des Gas-Kältemittel-Wärmetauschers 110 mündet in einem Abscheidesystem für Kondensat und sonstige Verunreinigungen, Bezugszahl 140, wo sich abgeschiedene Feuchtigkeit sammelt und über ein als Kondensatableiter dienendes Magnetventil 142 ausgestoßen wird. Das insoweit von Verunreinigungen und insbesondere Feuchtigkeit weitgehend befreite Gas, beispielsweise Druckluft, strömt dann bei der hier dargestellten Ausführungsform nach oben, durchströmt ein Ölfilter 144 zur Abscheidung noch vorhandener Feinstöltröpfchen und gelangt dann in das untere Ende der Gasrohrschlange 128, wo das Gas durch Abkühlung der Rohrwand dieser Rohrschlange 128 und der damit in Wärmekontakt stehenden Rohrwand des Rohres 112 innerhalb des Gas-Gas-Wärmetauschers 124 Wärme wieder aufnimmt. Dadurch wird wiederum das über den Anschluß 126 eintretende zu behandelnde Gas 14, das in Gegenrichtung strömt, vorgekühlt, während andererseits das behandelte Gas vor dem Austreten aus dem Stutzen 127 angewärmt wird. Das vorgekühlte Gas gelangt dann aus dem Gas-Gas-Wärmetauscher 24 in den Gas-Kältemittel-Wärmetauscher 110 und wird da wiederum durch Wärmekontakt mit den Rohrwandungen, die ihrerseits in Wärmekontakt stehen mit den Rohrwandungen des Kältemittelrohrs 116, auf eine Temperatur nahe 0° abgekühlt, so daß sich zunächst gasförmig in dem Gas enthaltende Feuchtigkeit in Form von Tropfen 146 als Flüssigkeit niederschlägt und kondensiert und sich im Kondensatabscheidesystem 140 sammelt.

Während gemäß Fig. 2 die Rohrschlange 112 für Gas nur entlang einer einzigen gemeinsamen Berührungslinie entlang der Axialrichtung der Rohrschlange für Kältemittel 116 berührt wird, so daß der Wärmeübergangswiderstand verhältnismäßig groß bleibt, ist dies bei der Darstellung gemäß Fig. 1 insofern anders, als dort zum einen sowohl die Rohrschlange 12 für zu behandelndes Gas wie auch die Rohrschlange 16 für Kältemittel jeweils die Form einer kegelstumpfartigen Wendel 27 bzw. 29 aufweisen, die jeweils gleiche Wendelsteigung S besitzen, und zum anderen so ineinander angeordnet sind, daß im wesentlichen jede Wendelwindung der einen Rohrschlange, siehe beispielsweise Bezugszahl 31 bzw. 33, jeweils von zwei benachbarten Wendelwindungen der anderen Rohrschlange, siehe die Bezugszahlen 33, 35 bzw. 31, 37 entlang einer zur Rohrachse parallelen Linie berührt wird, siehe z. B. den Berührungspunkt 20, der bereits erwähnt wurde.

Dadurch, daß nunmehr zwei Berührungslinien vorhanden sind, statt nur einer, wie bei der Darstellung gemäß Fig. 2, erhöht sich der Wärmeübergang auf annähernd das Doppelte, gleichzeitig vergleichmäßigt sich die Verteilung der Kälte auf den Querschnitt eines vom Gas durchflossenen Rohres und verbessert auch damit die Arbeitsweise der Anordnung.

Die Herstellung dieser zwei Wendelgebilde 27, 29 geschieht auf einfache Weise dadurch, daß man einen kegelstumpfförmigen Dorn 39 mit spiralförmig angeordneten Halterillen 41, 43 oder 45 versieht, deren Abstand dem Durchmesser des aufzuwickelnden Gasrohres entspricht. Die Halterillen können genau an die Rundung des Außenumfangs des aufzuwickelnden Gasrohres angepaßt sein, siehe Bezugszahl 43, oder vereinfacht eine dreieckige Rundform haben, Bezugszahl 41, oder auch lediglich Treppenstufen 45 bilden, die mit der einen Stufenlinie parallel und mit der anderen senkrecht zur Achse 47 des Dornes 39 liegen. Nach dem Aufwickeln des Gasrohres und damit nach Bildung der Wendel 27, ggf. unter Bildung auch noch der Anschlußbereiche 51 und 49 und unter Fixierung mittels gegebener Maßnahmen, beispielsweise Klemmeinrichtungen oder einiger Lötpunkte oder Lötnähte, wird dann auf die so gebildete kegelförmige Spirale oder Wendel 27 in die Spiraleinbuchtungen, die von den einzelnen Windungen der Wendel gebildet werden, ein Kältemittelrohr aufgewickelt und dadurch die zweite Wendel 29 gebildet, die dann wiederum fixiert wird, beispielsweise durch Lötungen 53, die vorzugsweise linienförmig entlang des Kegelmantels vom oberen bis zum unteren Ende geführt sind, um so die einzelnen Rohre mit den anderen angrenzenden Rohren mechanisch zu verbinden. Die dabei auftretende Ausfüllung der Kehlnähte mit Metal ergibt zudem einen noch besseren Wärmeübergang zwischen aneinander liegenden Rohren. Die Ausfüllung der Kehlnähte kann durch Tauchen in einem Lötbad erfolgen, alternativ kann Metall aber auch galvanisch oder durch Pulverauftragsspritzen in die Kehlnähte gebracht werden. Gleichzeitig können auch die Enden zur zweiten Rohrwendel 29 in eine geeignete Form gebogen werden, siehe die Bezugszahlen 55, 57. Dabei ist die Biegung der Anschlüsse so vorzunehmen, daß nunmehr der Kern 39 nach oben weggezogen werden kann, beispielsweise dann, wenn die Rillenform gemäß Bezugszahl 45 ausgeführt wurde, oder wie eine Schraube aus einer Mutter herausgedreht werden kann, nämlich dann, wenn eine Rillenform gemäß Bezugszahlen 41 oder 43 gewählt wurde. Falls die Biegung des Anschlusses 49 oder 55 aus späteren Montagegründen nach innen erfolgen soll, oder bei Tauchbadlötung, ist es zweckmäßig, den Dorn 39 vorher zu entfernen.

Das beschriebene Herstellungsverfahren ist außerordentlich einfach und rationell und führt zu sehr gleichförmigen Rohrquerschnitten, ganz im Gegensatz zu Konstruktionen, bei denen eine Rohr-in-Rohr-Anordnung gewählt ist. Die Verfahrensweise ist auch sehr flexibel, da mit nur einem Dorn entsprechender Erstreckung und festgelegtem Kegelwinkel 59 Wendel ganz unterschiedlichen Durchmessers -aber immer gleichen Kegelwinkels 59 - herstellbar sind, je nachdem, an welcher Stelle des Kegel mit dem Wickeln begonnen und an welcher Stelle geendet wird. Der Dorn muß lediglich hinsichtlich seiner Wendelsteigung S an den Außendurchmesser des Rohres mit dem größten Durchmesser, hier ist es das Rohr, das die Wendel 27 bildet, angepaßt sein.

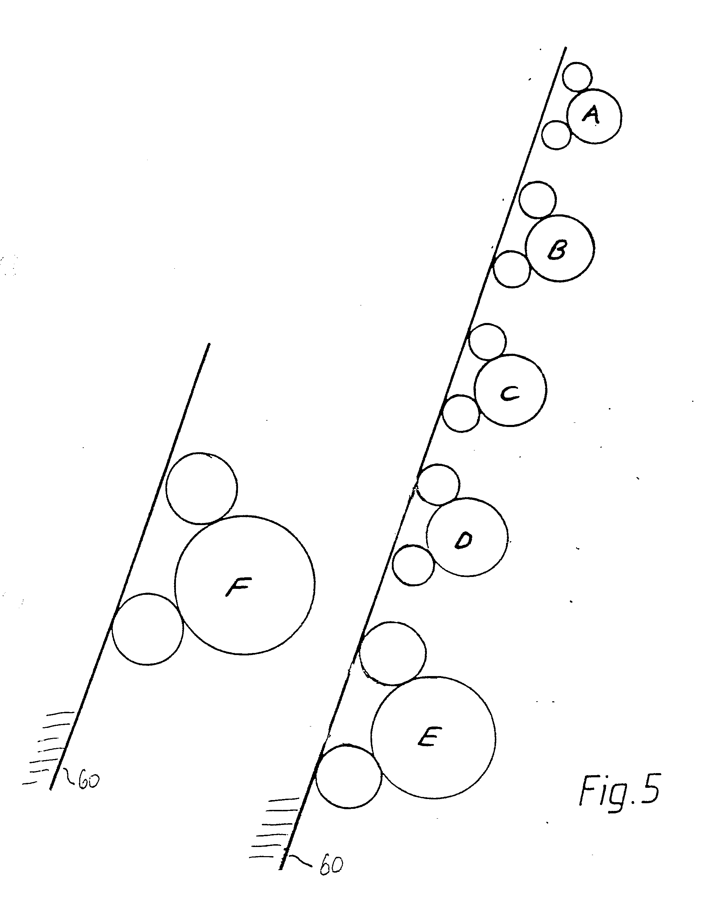

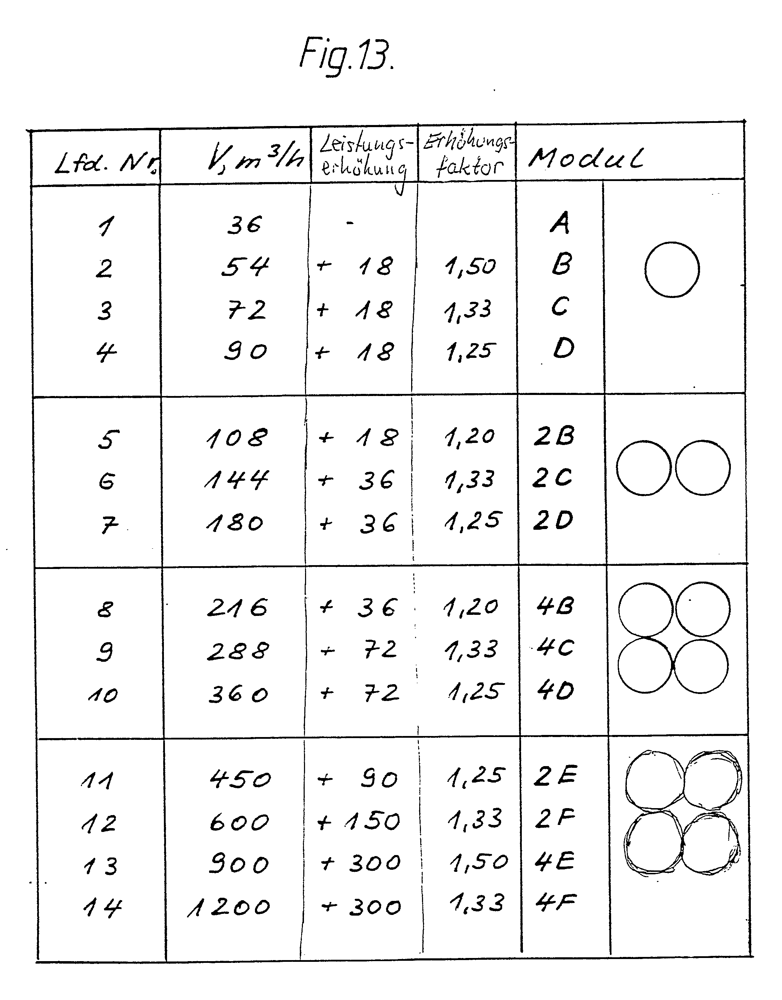

Es wurden verschiedene Rohrtypen für verschiedene Leistungsklassen untersucht, und diese sind in Fig. 5 schematisch dargestellt. Angegeben ist eine Buchstabenbezeichnung, die später in einer anderen Darstellung noch die zugehörige Leistung in cbm Druckluft pro Stunde wiedergibt, siehe Fig. 13.

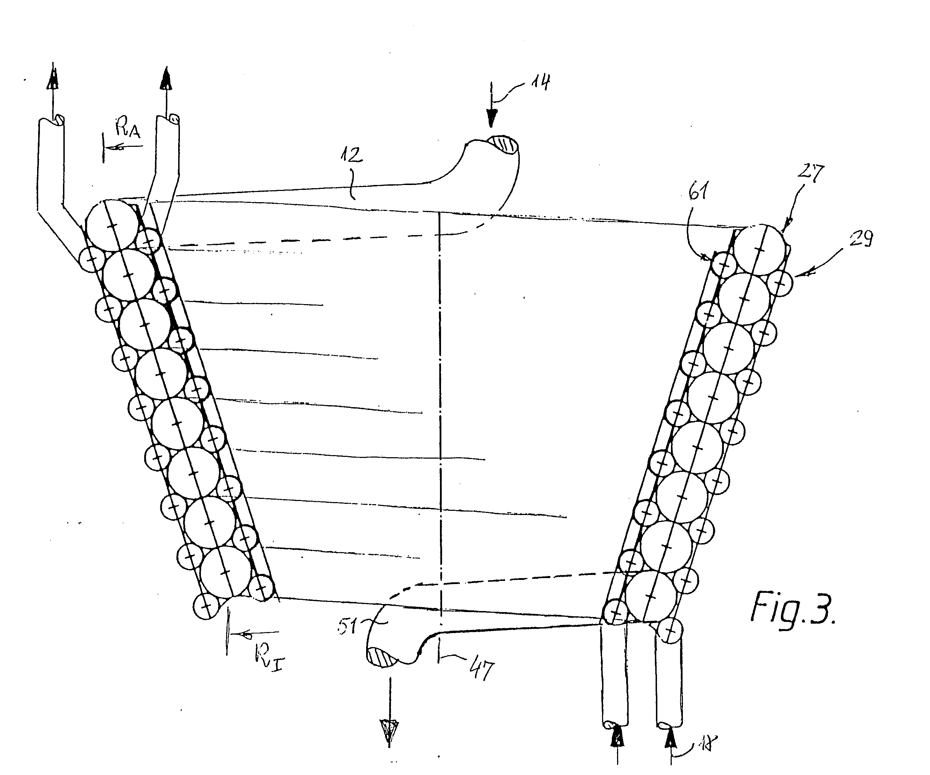

Denkt man sich die Linie 60 in Fig. 5 als Kegelmantel eines Dornes dargestelt, der auf seiner Außenfläche mit spiralförmigen Halterillen für aufzuwickelndes Rohr mit einem Wendelsteigungsabstand S versehen ist, der dem Außendurchmesser des Rohres mit dem jeweils größeren Durchmesser entspricht, kann man in diese Rillen auch das Rohr mit dem kleineren Durchmesser zunächst einwickeln, wobei sich dann die jeweils angegebenen Abstände zwischen den einzelnen Windungen des Rohres mit dem kleineren Durchmesser ergeben, und dann zwischen jeweils zwei derartiger Windungen das Rohr mit dem größeren Durchmesser einwickeln. Dadurch entsteht eine umgekehrte Anordnung, mit innenliegender Rohrwendel beispielsweise für Kältemittel, auf die dann das Rohr mit dem größeren Durchmesser als gasführendes Rohr aufgewickelt ist, wobei sich die Windungen dieses gasführenden Rohres gegenseitig berühren, im Gegensatz zu den Windungen des kältemittelführenden Rohres, die Abstand zueinander haben. Fig. 3 zeigt eine Anordnung, bei der auf eine innere kegelförmige Wendel 61 aus Rohr geringeren Durchmessers für Kältemittel eine zweite Rohrwendel 27 mit sich gegenseitig berührenden Windungen eines Rohres größeren Durchmessers für Gasdurch tritt angeordnet ist. Auf diese Construcktion läßt sich dann in der bereits eingangs beschriebenen Weise eine weitere Wendel 29 aus Rohr wiederum geringeren Durchmessers aufbringen, wieder für das Hindurchleiten von Kältemittel. Wegen der Schraubenform ist allerdings auch ein Herstellungsverfahren möglich, bei dem die Wendel 61 unabhängig hergestellt wird von der Wendel 27 (ggf. mit aufgebrachter Wendel 29). Nach Fertigstellung und entsprechender geeigneter Fixierung (und entsprechender Vorsorge hinsichtlich der Anschlußstücke) kann nämlich dann in eine fertige Wendel 27 die fertige Wendel 61 von oben her eingesteckt und hinsichtlich des letzten Stückes "eingeschraubt" werden. Auf diese Art können auch drei (oder mehr) Wendel vereinigt werden.

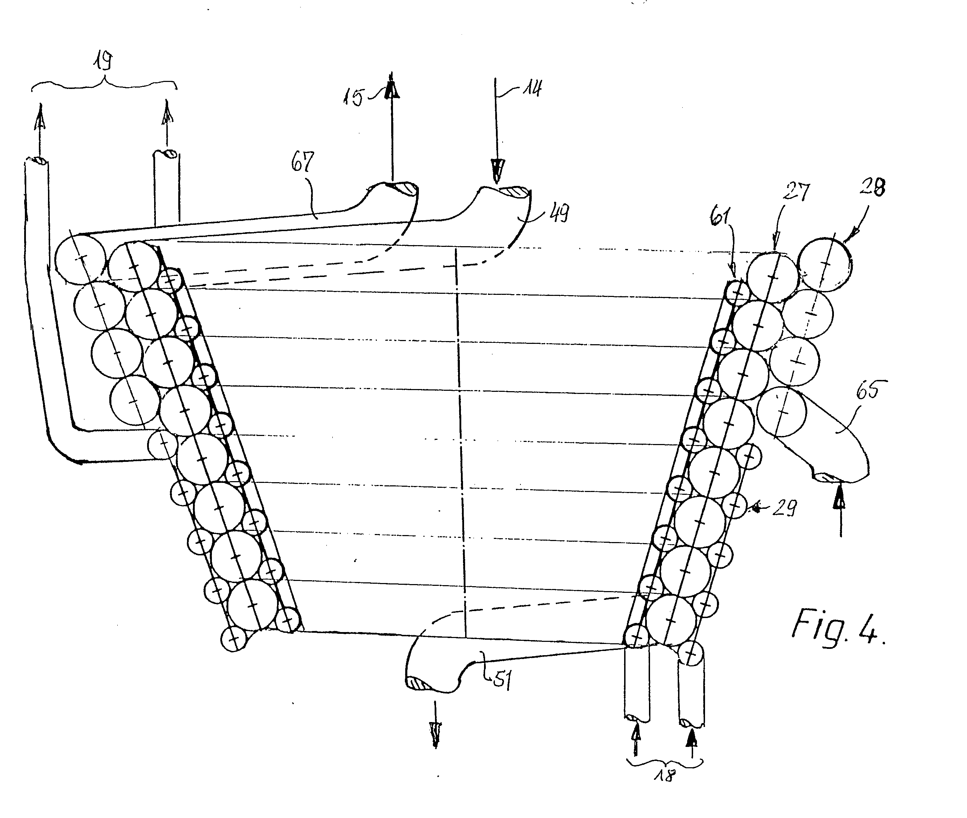

Die in Fig. 3 schematisch dargestellte Construcktion ist ähnlich wie die der Fig. 1, hat aber den Vorteil, daß die Rohrschlange des Kältemittels zwei Zweige, Bezugszahl 29 und 61, umfaßt, wobei der erste Zweig 61 einen innerhalb des von der Gasrohrschlange gebildeten Kegelstumpfes 27 angeordneten ersten Kegelstumpf 61 und der zweite Zweig eine außerhalb des Kegelstumpfes 27 der Gasrohrschlange angeordneten Kegelstumpf 29 bildet, derart, daß im wesentlichen jede Wendelwindung der Gasrohrschlange (abgesehen von der obersten Randwindung) von jeweils vier benachbarten Wendelwindungen der beiden Kältemittelrohrschlangenzweige 61, 29 entlang zur Gasrohrachse parallelen Linien berührt wird. Dadurch vervierfacht sich das Berührungsgebiet bzw. der Wärmeübergang erhöht sich auf annähernd das Vierfache und vergleichmäßigt sich noch weiter über die Oberfläche des Gasrohres. Die Zweige 61, 29 können später parallel geschaltet werden, wie in Fig. 4 angedeutet, oder in Serie, wie Fig. 9 erkennen läßt.

Beide Ausführungsformen, sowohl die der Fig. 1 wie auch die der Fig. 3, sind dadurch gekennzeichnet, daß die Rohrwendel räumlich so angeordnet sind, daß die Kegelstumpfachse 47 im wesentlichen senkrecht liegt und das Kegelstumpfende mit dem größeren Durchmesser oben liegt. Gleichzeitig ist die Strömungsrichtung der Gasströmung, ähnlich wie bei Fig. 2, von oben nach unten gerichtet, siehe Pfeil 14 in Fig. 1 und 3. Während seiner Wendelbewegung nach unten ändern sich Fliehkraft und Drehmoment, und es wird angenommen, daß durch diese Einwirkungen zusätzlich Wirbelkräfte entstehen, die zu einer erwünschten höheren Verwirbelung und damit vergrößerten Wärmeübergangszahl im unteren Bereich der Wendel führen, was in günstiger Weise eine Kompensation für verringerten Temperaturabstand zwischen zu kühlendem Gas und Kältemittel am unteren Ende der kegelförmigen Wendel sorgt, weil am unteren Ende der Wendel das Gas kälter als am oberen Ende ist.

Fig. 4 zeigt eine noch andere Ausführungsform, bei der ein Teil des äußeren Zweiges 29 der Kühlmittelwendel ersetzt ist durch eine Gaswendel 28, die der Wendel 128 im Gas-Gas-Wärmetauscher gemäß Fig. 2 entspricht und dazu dient, die getrocknete Luft, die aus dem in Fig. 4 nicht dargestellten Kondensatabscheider und sonstigen Einrichtungen austritt, vor der Abgabe an den Verbraucher zumindest teilweise wieder anzuwärmen, und zwar durch Wärmekontakt mit den oberen Windungen der Wendel 27, in die noch warmes zu behandelndes Gas eintritt, das seinerseits auf diese Weise eine Vorkühlung erfährt.

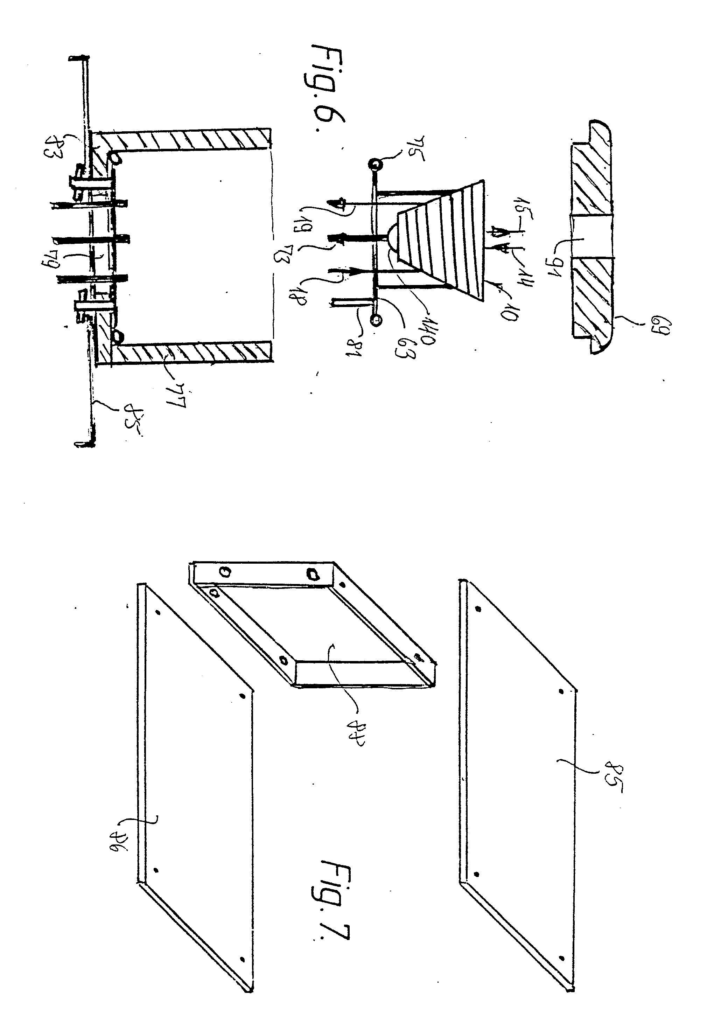

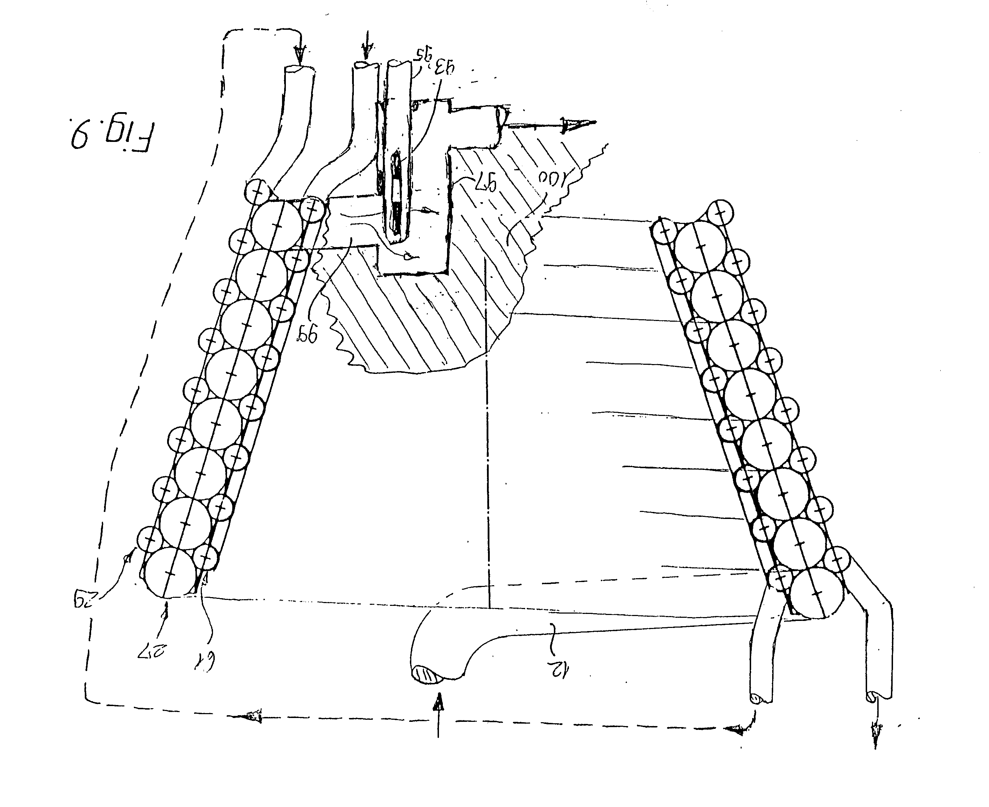

Ein Kondensatabscheider, wie er in Fig. 2 schematisch mit der Bezugszahl 140 dargestellt ist, ggf. auch noch in Verbindung mit einem Filter, ist in der Wendel gemäß Fig. 1, 3 oder 4 an die Stelle des Dornes 39 einschiebbar und so platzsparend unterbringbar. Fig. 6 zeigt eine derartige Konstruktion schematisch, wobei auf eine Platte 63 beispielsweise ein Gas-Kältemittel-Wärmetauscher 10 gemäß Fig. 4 aufmontiert ist, wobei entweder Zu- und Abfuhrleitungen, die durch die Platte 63 hindurchgeführt und mit ihr verlötet sind, als Stütze dienen, oder besonders vorgesehene Verstrebungen. Aus Platzersparnisgründen kann es zweckmäßig sein, einen Kondensatabscheider entsprechender Form, ggf. auch noch ein zugehöriges Ölfilter im Inneren des durch die kegelstumpfförmigen Schlangen 61, 27, 28 gebildeten Raumes unterzubringen, was auch den Vorteil hätte, daß die Anschlußleitungen zwischen beispielsweise unteren Ende 51 der Wendel 27 und dem Kondensatabscheider, siehe in Fig. 6 die Bezugszahl 140, kurz bleiben, ebenso die Verbindungsleitung zwischen dem oberen Ende des Kondensatableiters und dem Anschluß 65 am unteren Ende der Wendel 28. Die obere Anschlußleitung der Wendel 28, Bezugszahl 67, sowie der Anschluß 49 für die Zufuhr von zu behandelndem Gas 14 bzw. für die Abfuhr von behandeltem Gas 15 sind gemäß Fig. 6 nach oben herausgeführt und könnten in einen entsprechenden Anschlußstutzen in einem Deckel 69 enden, siehe auch Fig. 8, wo in einem Gehäusedeckel derartige Anschlußstutzen mit Gewinde zu erkennen sind. Nach unten geführt ist dann ein Anschluß für Kältemittelzufuhr, während die Kältemittelabfuhr 19 in Fig. 4 nicht nach oben, sondern nach unten abgeknickt ist und bei 19 gemäß Fig. 6 ebenfalls durch die Platte 63 hindurchgeführt und beispielsweise mit ihr dicht verlötet ist. Die weitere Abfuhrleitung, die mit 73 bezeichnet ist und an den Kondensatabscheider 140 führt, dient zur Abfuhr von Kondensat und ist ebenfalls in der Platte 63 dicht eingelötet.

Diese Grundplatte 63 mit dem aufgesetzten modulartigen Gas-Kältemittel-Wärmetauscher und darin eingebrachtem Kondensatabscheider läßt sich dann unter Beigabe eines Dichtungsringes 75 in ein becherförmiges, vorzugsweise rundes Gehäuse 77 einsetzen, das eine entsprechende Öffnung 79 zum Hindurchführen der Anschlußrohre 18, 19 und 73 aufweist. Mit Hilfe von an der Platte ebenfalls angelöteten Befestigungsmitteln, beispielsweise eines Schraubbolzens 81 läßt sich dann die Platte 63 an dem Gehäuseboden 83 und ggf. gleichzeitig an der Deckelplatte 85 eines weiteren Rechteckgehäuses 87 befestigen, das weitere Bestandteile eines Drucklufttrockners enthält, wie insbesondere den Kompressor 134, den Kondensator 136, das Kondensatableiterventil 142 sowie ggf. Steuerungs- und Anzeigeeinrichtungen, soweit diese nicht an einer fernen Stelle untergebracht sind, siehe Bezugszahl 89 in Fig. 8. Das Gehäuse 77 ist vorzugsweise flüssigkeitsdicht, ebenso wie die Durchführungen der Leitungen 18, 73 und 19 durch die Grundplatte 63 flüssigkeitsdicht gestaltet sind, wie auch die Platte 63 infolge der Dichtung 75 eine flüssigkeitsdichte Verbindung mit dem Behälterboden 83 besitzt. Nach dem Einsetzen des Gas-Kältemittel-Wärmetauschers 10 gemäß Fig. 6 in dem Behälter 77 kann daher das Gehäuse mit einer wärmeübertragenden/wärmespeichernden Masse·gefüllt werden, beispielsweise mit Sole, oder mit einem Wasser-Glykol-Gemisch, oder, was sich besonders gut bewährt hat, mit einer Paste, die durch Vermischen von Kohlestaub oder ähnlichem mit einer Flüsssigkeit wie Sole oder Antifrogen gewonnen wird. Anschließend wird dann nach dichtem Anschließen oder Hindurchführen der Zuleitungen 14 und 15 durch den Deckel, wozu der Durchbruch 91 dienen kann, der Behälter 77 ebenfalls flüssigkeitsdicht nach oben hin abgeschlossen, so daß er nun ohne Probleme gehandhabt werden kann. Die Flüsssigkeitsdichtheit braucht nicht besonders gut zu sein oder muß nur vorübergehend gewährleistet sein, sofern man als wärmeübertragende/wärmespeichernde Flüssigkeit eine solche wählt, die zunächst nur beim Einfüllen flüssig oder zähflüssig ist und dadurch alle Winkel zwischen den einzelnen Rohrschlangen erreicht und ausfüllt, wonach diese Flüssigkeit oder viskose Flüssigkeit sich dann soweit verfestigen oder ganz aushärten kann, daß es anschließend auf die Dichtheit des Behälters nicht mehr ankommt.

Eine solche Masse wäre beispielsweise Bitumen, wobei diese Art der Thermalmasse den Vorteil hat, daß sie später auch bei Undichtwerden des Behälters nicht verdampfen kann, damit die Umwelt nicht belastet und außerdem zu keiner Veränderung der Betriebseigenschaften führt.

Die Einbringung der Masse ergibt zusätzliche Wärmebrücken zwischen den nebeneinander liegenden Windungen der Wendeln 29, 27, und ggf. 61 und 28. Außerdem ergibt diese Masse eine zusätzliche Wärmespeicherfähigkeit, die Vorteile bei intermittierendem Betrieb bringt, der den Vorteil hat, daß die Nebenschlußleitung 138 gemäß Fig. 2 entfallen oder zumindest abgeschaltet werden kann, da der Verdichter 134 dann nur noch so viel Kältemittel produziert, wie zur Aufrechterhaltung einer bestimmten Temperatur bzw. eines bestimmten Druckes für das Kältemittel innerhalb des Gas-Kältemittel-Wärmetauschers notwendig ist. Mit der Konstrucktion gemäß Fig. 9 erreicht man mittels nur eines Temperaturfühlers, daß ein Ausfrieren von Kondensat mit Sicherheit ausgeschlossen ist. Statt mehrere Meßfühler, in Fig. 2 z. B. mit 131, 133 bezeichnet, zu benutzen, genügt hier nur ein einziger Temperaturfühler 141, der in einem Metallrohr 95 von unten her einschiebbar ist, welches Metallrohr 95 wiederum mit einem Metallzylinder 97 verlötet oder verschweißt ist, der von bei 99 austretendem Gas durchströmt ist und gleichzeitig in Thermalmasse 100 eingebettet und mit einem Kältemittel führenden Rohr verbunden ist. Durch entsprechende Formgebung und durch geeignete Wärmeübergangswiderstände läßt sich erreichen, daß einerseits die Temperatur des aus dem Gas-Kälte mittel-Wärmetauscher 10 ausfließenden Gases an der Stelle 99 erfaßt wird, also die tatsächliche aktuelle Temperatur des Gases, andererseits für die Fälle, wo ein Gasdurchfluß nicht stattfindet, d. h. in Ruhebetrieb der Anlage, gleichwohl die Temperatur der Gesamtanordnung vom Temperaturfühler 93 richtig ermittelt wird, und zwar über die Temperatur der Thermalmasse 100 bzw. die des Kältemittels. Auf diese Weise wird erreicht, daß auch dann, wenn keine Druckluft gebraucht wird, d. h., daß an dem Fühler 93 kein Gas vorbeiströmt, keine irreführende Anzeige entsteht.

Es wurde bereits darauf hingewiesen, daß die Form des neu entwickelten Gas-Kältemittel-Wärmetauschers besonders geeignet für Modulaufbau ist. So zeigt die Fig. 8 eines Anordnung von zwei derartigen Moduln 11, die auf einem gemeinsamen Gehäuse 87 aufgesetzt sind, wobei auch dieses Gehäuse wieder aus modulartigen Bestandteilen gleicher Bauweise aufgebaut sein kann, beispielsweise aus Deckelplatte 85, gleichaussehender Bodenplatte 86 sowie damit verschraubbaren Seitenteilen 88. Diese Konstruktion ist auf Fig. 13 in der zweiten Spalte dargestellt. In der Spalte darüber ist nur ein Modul verwendet, in der Spalte darunter sind es vier, in der letzten Spalte ebenfalls vier. Durch Moduln unterschiedlicher Leistungsstärke, siehe die Bezeichnungen A, B, C, D, und durch Kombination derartiger Moduln unterschiedlicher Leistungsstärke in verschiedener Weise, z. B. 2B, 2C, 2D, oder durch Vervierfachung, siehe 4B, 4C, 4D, oder auch durch Kombination von 2 und 2 (2E, 2F, siehe letzte Spalte) lassen sich modulartig ganz unterschiedliche Leistungswerte erreichen.

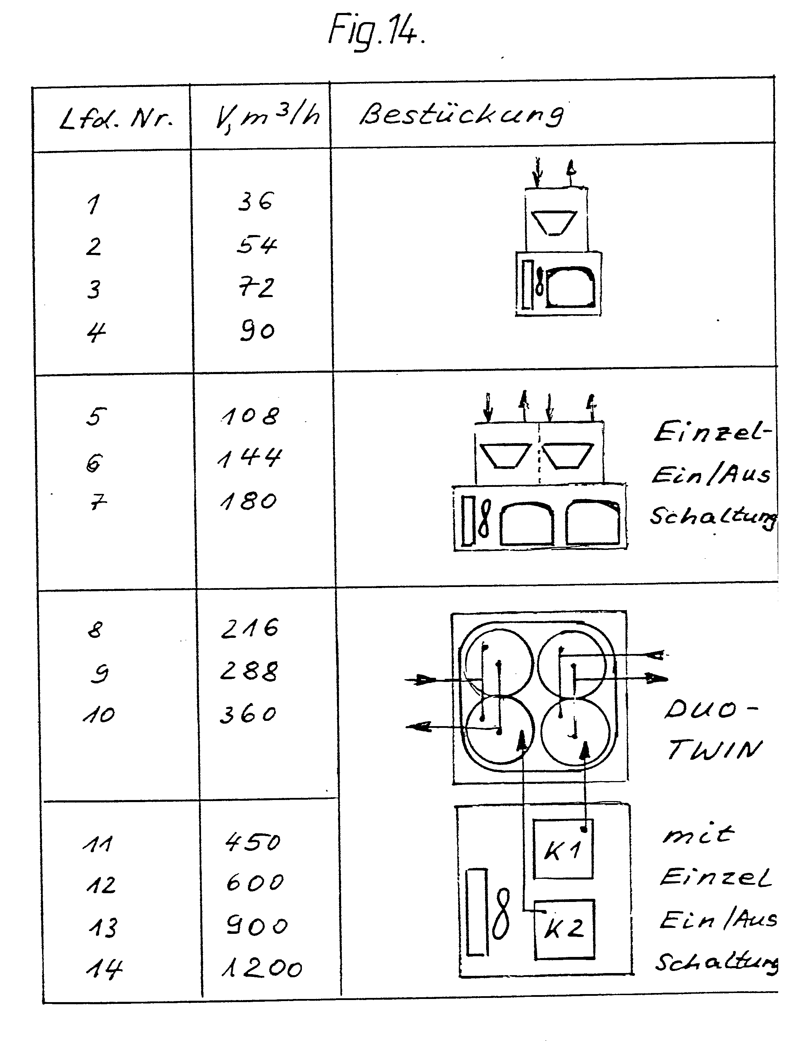

Die Kombinationsmöglichkeiten sind sehr vielfältig, so zeigt die Liste der Fig. 14, daß mit der schematisch dargestellten Bestückung in der rechten Spalte beispiels weise vier verschiedene Durchflußmöglichkeiten verwirklicht sind. Kombiniert man zwei Einzeleinheiten gemäß der zweiten Spalte, ergeben sich weitere Leistungsstufen, wobei man, da hier auch zwei Verdichter vorgesehen sind, durch wahlweises Ein- und Ausschalten die unterschiedlichen Leistungen erreichen kann.

In den beiden letzten Spalten ist eine Parallelschaltung von jeweils zwei Moduln, die jeweils auch mit einem Verdichter versorgt sind, vorgesehen, wodurch sich weitere Stufen verwirklichen lassen.

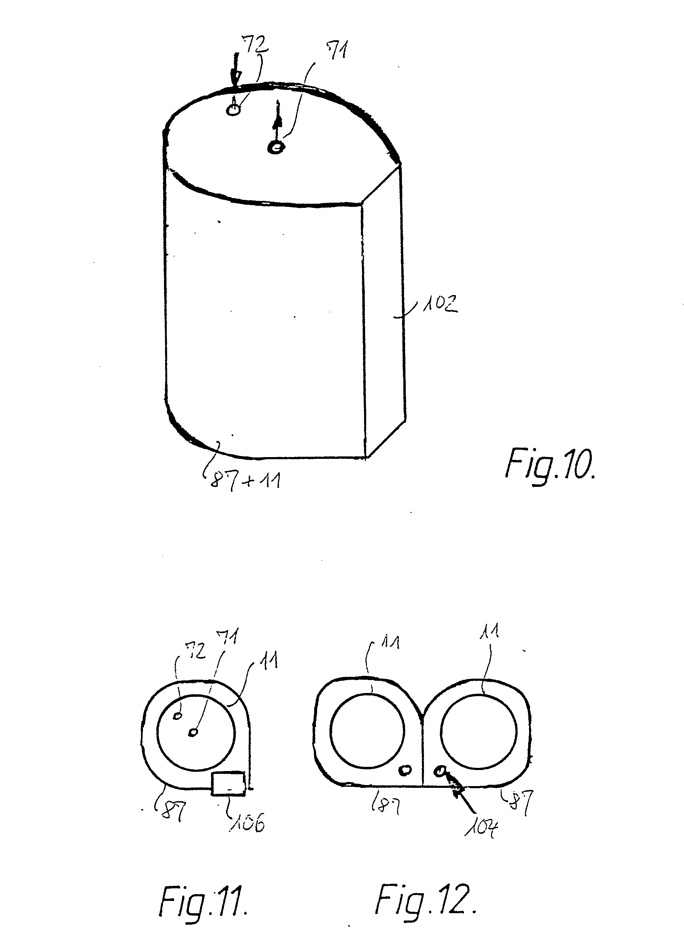

Durch besondere Formgebung des Gehäuses, daß auch das Gehäuse für die übrigen Bestandteile eines Drucklufttrockners umfassen kann, siehe Fig. 10, läßt sich der Zusammenbau von mehreren Einheiten, die unabhängig voneinander arbeiten können, erleichtern. Es ist auch denkbar, siehe die Fig. 11, einen runden oberen Teil (Gehäuse 11 mit Anschlüssen 71, 72) auf ein Gerätegehäuseteil 87 mit Tropfenform aufzusetzen, wobei dann derartige Einheiten wiederum leicht zu Baugruppen vereinigt werden können, wie es Fig. 12 zeigt.

Eine Anschlußleiste 106 für Steuerungen von Ferne ist in Fig. 8 zu erkennen und auch in Fig. 11 schematisch dargestellt. Bei der Ausführungsform gemäß Fig. 12 sind Kabelkanäle 104 vorgesehen, durch die die entsprechenden Anschlüsse hindurchgeführt werden können.

Durch diese dadurch mögliche externe Überwachung auf elektronische Weise kann die gesamte Anordnung in einen Schaltschrank eingebaut werden und von einer zentralen Überwachungswarte überwacht werden.

Ein weiterer Vorteil ist der, daß die gesamte Anordnung keine abnahmepflichtigen kesselartigen Behälter aufweist, so daß keine kostspieligen Abnahmevorgänge (z. B. durch den technischen Überwachungsverein) notwendig sind.

Es können Betriebseinheiten unterschiedlicher Anforderungen miteinander kombiniert werden, beispielsweise könnte ein erster Modul mit einem ersten Verdichter eine Betriebsweise mit eine Betriebsdruck von 7 bar ermöglichen, mit einem Taupunkt von 8° C. Eine daneben angeordnete zweite Einheit mit eigenem Verdichter könnte für 12 bar Betriebsdruck für die Druckluft angeordnet werden, bei einem Taupunkt DTP von 2° C. Andererseits kann man aufgrund der identischen Strömungsverhältnisse (gleiche Rohrlängen, gleiche Rohrdurchmesser) ohne Probleme Geräte gleichen Nennwertes auch strömungsmäßig parallel schalten und wahlweise durch entsprechende Ventile zuschalten oder abschalten. Bei einer angeforderten Leistung von weniger als 50 % der Nennleistung würde sich beispielsweise ein Druckabfall von weniger als 0,1 bar einstellen, woraufhin durch eine entsprechende Drucksteuerung und Schaltautmatik ein Ventil geschlossen werden könnte und so nur mit halber Leistung gearbeitet werden muß. Steigen die Anforderungen über 50 % und damit auch der Druckabfall an dem nur einen Gerät, könnte eine Umschaltung vorgenommen werden, die einen zweiten parallelen Gerätesatz in Betreib setzt und dadurch volle Nennleistung ergibt.

Die letztgenannte Parallelschaltung von zwei Geräten stellt gleichzeitig auch eine Sicherheitssteuerung dar, da bei Ausfall einer Anlage stets noch die andere Anlage zur Verfügung steht.

Außerdem ist es möglich, wirtschaftlicher zu planen, z. B. dadurch, daß zunächst nur eine Einheit angeschafft wird, bei wachsenden Anforderungen aber noch eine zweite dazu gekauft wird, die in einfacher Weise parallel geschaltet werden kann.

Derartige Kombinationsmöglichkeiten sind mit bisher bekannte Anlagen wegen ihrer fertigungstechnisch bedingter unterschiedlicher Strömungswiderstände auch bei gleichen Nennleistungen nicht zu verwirklichen.

## Ansprüche

1. Gas-Kältemittel-Wärmetauscher, insbesondere für Drucklufttrockner, bestehend aus einer ersten Rohrschlange (12) zum Hindurchführen von zu kühlendem Gas (14), und einer zweiten Rohrschlange (16) zum Hindurchführen von Kältemittel (18), wobei die zweite Rohrschlange (16) zumindest über eine Teilerstreckung der ersten Rohrschlange (12) mit dieser in direktem Wärmeübergangskontakt (20) steht, dadurch gekennzeichnet, daß die erste (12) und die zweite (16) Rohrschlange jeweils die Form einer kegelstumpfartigen Wendel (27, 29) aufweisen, die jeweils gleiche Wendelsteigung (S) besitzen und so ineinander angeordnet sind, daß im wesentlichen jede Wendelwindung (31, 37; 35, 33) der einen Rohrschlange (27 bzw. 29) von jeweils zwei benachbarten Wendelwindungen (35, 33 bezüglich 31; 31, 37 bezüglich 33) der anderen Rohrschlange entlang einer zur Rohrachse parallelen Linie berührt wird.

2. Gas-Kältemittel-Wärmetauscher nach Anspruch 1, dadurch gekennzeichnet, daß die kegelstumpfartigen, wendelförmigen Rohrschlangen (27, 29) räumlich so angeordnet sind, daß die Kegelstumpfachse (47) im wesentlichen senkrecht steht und das Kegelstumpfende mit dem größeren Durchmesser oben liegt.

3. Gas-Kältemittel-Wärmetauscher nach Anspruch 1 oder 2, dadurch gekennzeichnet, daß die Rohrschlange (29) für das Kältemittel aus Rohrmaterial mit kleinerem Durchmesser besteht, als das Rohrmaterial für die Rohrschlange (27) für das zu kühlende Gas.

4. Gas-Kältemittel-Wärmetauscher nach einem der Ansprüche 1 bis 3, dadurch gekennzeichnet, daß die Rohrschlange (29) für das Kältemittel (18) zwei Zweige (29, 61) umfaßt, wobei der erste Zweig (61) einen innerhalb des von der Gasrohrschlange (27) gebildeten Kegelstumpfes angeordneten ersten Kegelstumpf (61) und der zweite Zweig (29) einen außerhalb des Kegelstumpfes (27) der Gasrohrschlange angeordneten Kegelstumpf (29) bildet, derart, daß im wesentlichen jede Wendelwindung der Gasrohrschlange (27) von jeweils vier benachbarten Wendelwindungen der Kältemittelrohrschlangenzweige (29, 61) entlang von zur Gasrohrachse parallelen Linien berührt wird.

5. Gas-Kältemittel-Wärmetauscher nach einem der Ansprüche 2 bis 4, dadurch gekennzeichnet, daß das obere Ende (12) der Gasrohrschlange (27) mit einem Gaszufuhranschluß (126) und das untere Ende (51) mit dem Gasabfuhranschluß verbunden ist, und daß das untere Ende (57) des Kältemittelrohrs (29) oder der Kältemittelrohre (29, 61) mit einem Kältemittelzufuhranschluß (z. B. 130 in Fig. 2) und daß das obere Ende (55) des Kältemittelrohrs (29) oder der Kältemittelrohre (29, 61) mit einem Kältemittelabfuhranschluß verbunden sind, und daß bei Vorhandensein von zwei Kältemittelrohren (29, 61) diese parallel oder in Serie (Fig. 9) geschaltet sind.

6. Gas-Kältemittel-Wärmetauscher nach Anspruch 5, dadurch gekennzeichnet, daß die Rohrschlangenanordnung (27, 29; 61) in einem Gehäuse eingeschlossen ist, das mit einer wärmeübertragenden/wärmespeichernden Masse (100) gefüllt ist.

7. Gas-Kältemittel-Wärmetauscher nach Anspruch 6, dadurch gekennzeichnet, daß das Gehäuse (77) flüssigkeitsdicht ist und daß die wärmeübertragende/wärmespeichernde Masse (100) eine Flüssigkeit, wie Sole oder Wasser-Glykolgemisch, ist.

8. Gas-Kältemittel-Wärmetauscher nach Anspruch 6, dadurch gekennzeichnet, daß das Gehäuse (77) im wesentlichen flüssigkeitsdicht ist und daß die wärmeübertragende/wärmespeichernde Masse eine Flüssigkeit oder eine Paste ist, deren Viskosität hoch ist oder die nach dem Einfüllen in das Gehäuse hoch wird, oder die sich ganz verfestigt.

9. Gas-Kältemittel-Wärmetauscher nach Anspruch 8, dadurch gekennzeichnet, daß die wärmeübertragende/wärmespeichernde Masse aus Kohlestaub oder einem ähnlichen pulverförmigen Feststoff besteht, der durch eine Flüssigkeit, wie Sole, zu einer Paste gebunden ist.

10. Gas-Kältemittel-Wärmetauscher nach einem der Ansprüche 6 bis 9, dadurch gekennzeichnet, daß am unteren Ende des Gehäuses (77) ein mit dem austretenden Gas (99) einerseits und der wärmeübertragenden/wärmespeichernden Masse (100) andererseits in Wärmekontakt stehender Temperaturfühler (93, 95) versehen ist.

11. Gas-Kältemittel-Wärmetauscher nach Anspruch 10, dadurch gekennzeichnet, daß der Temperaturfühler ein in einem Metallrohr (95) einschiebbarer Fühler (93) ist und das Metallrohr (95) mit einem Metallzylinder oder Metallstutzen (97) verschweißt oder verlötet ist, der vom aus der Gasrohrschlange austretenden Gas (99) durchströmt ist und in der wärmeübertragenden/wärmespeichernden Masse (100) eingebettet ist.

12. Gas-Kältemittel-Wärmetauscher nach einem der Ansprüche 4 bis 10, dadurch gekennzeichent, daß ein oberer Teil des äußeren Zweiges (29) des Kältemittelrohrs ersetzt ist durch ein Gasrohr (28) dessen unteres Ende (65) it dem unteren Ende der Gasrohrwendel (27) des Gas-Kältemittel-Wärmetauschers (10) - ggf. unter Zwischenschaltung eines Kondensatabscheiders und/oder andere Gasbehandlungsanordnung - verbunden und dessen oberes Ende (67) mit dem Gasabfuhranschluß (127) verbunden ist.

13. Gas-Kältemittel-Wärmetauscher nach Anspruch 12, dadurch gekennzeichnet, daß der Kondensatabscheider und/oder die andere Gasbehandlungsanordnung innerhalb des von dem Rohrschlangenkonus gebildeten Hohlraums angeordnet ist.

14. Verfahren zur Herstellung einer kegelstumpfartig verlaufenden Rohrwendelanordnung für den Gas-Kälte mittel-Wärmetauscher gemäß einem der Ansprüche 1 bis 13, dadurch gekennzeichnet, daß

a) auf einen kegelstumpfförmigen Dorn (39) mit im Abstand entsprechend dem größten Rohrdurchmesser (S) angeordneten, spiralförmigen Halterillen (41, 43, 45) ein Rohr (27) spiralförmig aufgewickelt und fixiert (53) wird,

b) auf die so gebildete kegelförmige Spirale (27) in deren Spiraleinbuchtungen ein weiteres Rohr von gleichem oder kleinerem Durchmesser (29) aufgewickelt und fixiert (53) wird,

c) ggf. neben die gemäß b) gebildete kegelförmige Spirale (Fig. 4, Bezugszahlen 28, 29) oder über diese Spirale (Fig. 3, Bezugszahlen 27, 29) eine dritte Spirale aufgebracht und fixiert wird;

d) der Dorn (39) aus der gewickelten Spiralanordnung durch Herausdrehen/Herausziehen entfernt wird.

15. Verfahren nach Anspruch 14, dadurch gekennzeichnet, daß eine gemäß Anspruch 14 hergestellte kegelstumpfförmige Spiralanordnung hergestellt, daß eine zweite derartige Anordung hergestellt und dann die beiden Anordnungen durch Ineinanderschrauben miteinander vereinigt werden.

16. Verfahren nach Anspruch 15, dadurch gekennzeichnet, daß zum Ausfüllen der Spalte zwischen aneinander liegenden Rohren durch Metall (53) die Rohrschlangenanordnung (27, 29, 61) in ein Lötbad getaucht, oder in einem galvanischen Bad mit Metall beschichtet, oder die Spalte mit Metallpulver ausgespritzt werden.

17. Verwendung eines Gas-Kältemittel-Wärmetauschers gemäß einem der Ansprüche 1 bis 13, in einem Drucklufttrockner, der eine thermostatgesteuerte Kälte maschine (134) zur Kompression des Kältemittel sowie einen Kondensatabscheider (140) aufweist.

18. Verwendung eines Gas-Kältemittel-Wärmetauschers gemäß einem der Ansprüche 1 bis 13 in Form eines Moduls zum Aufbau von Drucklufttrocknern abgestufter Nennleistung.

19. Verwendung nach Anspruch 18, wobei der Gas-Kältemittel-Wärmetauscher durch zwei Moduln gleicher Baugröße gebildet ist, die fluidmäßig parallel geschaltet sind.

20. Verwendung nach Anspruch 18, wobei die Nennleistung der beiden Moduln gleich ist und die zugehörigen Kompressoren derart einstellbar sind, daß bei Störung oder Ausfall des einen Kältemittelverdichters dieser abgeschaltet und der andere angeschaltet wird.

EP 0 344 351 A1

Fig.1.

**Fig.2.**

Fig. 3.

Fig. 4.

Fig.5

Fig.6.

Fig.7.

Fig. 8.

Fig. 9

Fig.10.

Fig.11.

Fig.12.

EP 0 344 351 A1

## Fig.13.

| Lfd. Nr. | V, m³/h | Leistungs-erhöhung | Erhöhungs-faktor | Modul | |
|---|---|---|---|---|---|
| 1 | 36 | - | | A | |
| 2 | 54 | + 18 | 1,50 | B | ◯ |
| 3 | 72 | + 18 | 1,33 | C | |
| 4 | 90 | + 18 | 1,25 | D | |
| 5 | 108 | + 18 | 1,20 | 2B | ◯◯ |
| 6 | 144 | + 36 | 1,33 | 2C | |
| 7 | 180 | + 36 | 1,25 | 2D | |
| 8 | 216 | + 36 | 1,20 | 4B | ◯◯ |
| 9 | 288 | + 72 | 1,33 | 4C | ◯◯ |
| 10 | 360 | + 72 | 1,25 | 4D | |
| 11 | 450 | + 90 | 1,25 | 2E | |
| 12 | 600 | + 150 | 1,33 | 2F | |
| 13 | 900 | + 300 | 1,50 | 4E | |
| 14 | 1200 | + 300 | 1,33 | 4F | |

## Fig.14.

| Lfd. Nr. | V, m³/h | Bestückung |
|---|---|---|
| 1 | 36 | |
| 2 | 54 | |
| 3 | 72 | |
| 4 | 90 | |
| 5 | 108 | Einzel- Ein/Aus Schaltung |
| 6 | 144 | |
| 7 | 180 | |
| 8 | 216 | DUO- TWIN |
| 9 | 288 | |
| 10 | 360 | |
| 11 | 450 | mit Einzel Ein/Aus Schaltung |
| 12 | 600 | |
| 13 | 900 | |
| 14 | 1200 | |

Fig.15. <u>Einsatzvielfalt</u>
<u>Betriebssicherheit</u>

2 Betriebe mit unterschiedlichen Anforderungen

Betrieb

A p = 7 bar
DTP = 8 °C

B p = 12 bar
DTP = 2 °C

Wirtschaftlichkeits · Steuerung

$V > 50\%$    $\Delta p > 0,1\,bar$    DI+II ein

$V < 50\%$    $\Delta p < 0,1\,bar$    DI aus.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-2 681 797  (P. VAN VLIET)<br>* Spalte 5, Zeilen 1-49; Figur 4 *<br>---- | 1,3 | B 01 D   53/26<br>F 28 D    7/02<br>F 28 F   23/00 |
| A | FR-B-  397 812  (M. LANGER)<br>* Figuren 1,2 *<br>---- | 1,3 | |
| A | GB-A-2 074 305  (G. APPLEGATE)<br>* Ansprüche 1,3-5 *<br>---- | 1,6-9 | |
| A | US-A-4 384 569  (F.R. CLEARMAN)<br>* Zusammenfassung *<br>---- | 1,6-9 | |
| A | EP-A-0 165 220  (ELEKTROLUX)<br>* Figur 1 *<br>---- | 10,11 | |
| A | US-A-4 385 658  (G. LEONARD)<br>* Figur 2 *<br>---- | 10,11 | |
| A | US-A-4 557 323  (B. HARDY)<br>* Figuren 1-8 *<br>---- | 1,14,15 | |
| A | GB-A-2 085 571  (ORION KIKAI KABUSHIKI)<br>* Seite 1, Zeile 16 - Seite 2, Zeile 13; Figur 1 *<br>---- | 17 | RECHERCHIERTE SACHGEBIETE (Int. Cl.4)<br><br>B 01 D<br>F 28 D<br>F 28 F<br>F 25 B<br>F 25 D |
| A | WO-A-8 600 977  (R. CONRY)<br>* Zusammenfassung *<br>---- | 18 | |
| A | FR-A-2 384 969  (FIMEC)<br>* Ansprüche 1-4 *<br>---- | 18-20 | |
| A | CH-B-  194 006  (SULZER)<br>* Anspruch; Figur 1 *<br>---- | 18-20 | |
| A | WO-A-8 001 468  (HEATRANS AG)<br>---- | 1 | |
| A | EP-A-0 067 044  (RUSSELL FINEX LTD)<br>----- | 1 | |

Der vorliegende Recherchenbericht wurde für alle Patentansprüche erstellt

| Recherchenort | Abschlußdatum der Recherche | Prüfer |
|---|---|---|
| DEN HAAG | 25-01-1989 | KANOLDT W.W. |